# EUROPÄISCHE PATENTSCHRIFT

(11) **EP 0 469 020 B1**
(45) Veröffentlichungstag und Bekanntmachung des Hinweises auf die Patenterteilung: **08.09.1993**
(21) Anmeldenummer: 90906208.5
(22) Anmeldetag: 23.04.1990
(51) Int. Cl.: B23Q 7/14, B65G 37/02

(54) **VORRICHTUNG ZUM BEARBEITEN VON WERKSTÜCKEN MIT EINER FOLGE VON STATIONÄREN BEARBEITUNGSSTATIONEN**
DEVICE FOR MACHINING WORKPIECES WITH A SERIES OF STATIONARY MACHINING STATIONS
DISPOSITIF D'USINAGE DE PIECES COMPORTANT UNE SERIE DE POSTES D'USINAGE STATIONNAIRES

(30) Priorität: 21.04.1989 DE 3913213
(43) Veröffentlichungstag der Anmeldung: 05.02.1992
(73) Patentinhaber: Maschinenfabrik Rissen GmbH, D-22552 Hamburg (DE)
(72) Erfinder: VON SELD, Sigurd, D-2000 Hamburg 63 (DE)
(74) Vertreter: Glawe, Delfs, Moll & Partner
(86) Internationale Anmeldenummer: EP9000653
(87) Internationale Veröffentlichungsnummer: WO9012673

(56) Entgegenhaltungen:
- DE-A- 1 750 279
- DE-A- 3 427 699
- FR-A- 1 376 657
- FR-A- 2 463 081
- US-A- 3 765 268
- US-A- 3 868 867

## Beschreibung

Die Erfindung betrifft ein Verfahren zum Führen einer geschlossenen Reihe von Werkstückhaltern durch eine geschlossene Folge von kreisförmig stationär angeordneten Bearbeitungsstationen, in denen die Werkstückhalter zeitweise festgehalten und periodisch umgesetzt werden sowie Vorrichtungen zur Durchführung dieses Verfahrens nach den Oberbegriffen des Ansprüche 2 und 13.

Bei eine bekannten Verfahren dieser Art (FR-B 1376657), das der Anspruchsformulierung zugrundeliegt, wird bei der Herstellung von Massenprodukten, die eine Reihe von Bearbeitungsstationen durchlaufen, wie beispielsweise Verpackungsbehälter und Papierbecher, eine Reihe stationärer Bearbeitungsstationen mit Dearbeitungswerkzeugen vorgesehen, an denen ein Förderorgan, beispielsweise eine Kette oder ein drehbarer Tisch mit Haltern für die Werkstücke entlang läuft, die in den Bearbeitungsstationen zeitweise zur Durchführung der Bearbeitungsschritte stillgesetzt werden. Das Umsetzen der Werkstücke von einer Station in die nächste findet für alle Werkstücke gleichzeitig statt. Dabei treten beträchtliche Massenkräfte auf, die der Beschleunigung des Arbeitsablaufs Grenzen setzen. Im Gegensatz zu einem solchen diskontinuierlichen Maschinenlauf gibt es auch kontinuierlich arbeitende Maschinen, bei denen Werkstückhalter, die an eine Kette angeordnet sind, um Drehtische laufen, an denen Werkzeuge angeordnet sind. Dabei können meist an jedem Drehtisch nur gleichartige Bearbeitungsvorgänge durch gleichartige Werkzeuge ausgeführt werden. Die Werkzeuge müssen daher jeweils in Vielzahl vorgesehen sein, was einen beträchtlichen Aufwand mit sich bringt. Jedoch sind auch Maschinen solcher Art bekannt, bei denen mehrere unterschiedliche Serien von Werkzeugen an einem Drehtisch angeordnet sind und die Werkstücke nacheinander mit unterschiedlichen dieser Werkzeuge in Verbindung gebracht werden, indem die die Werkstückhalter tragende Kette über ein außenliegendes Umlenkrad geführt wird, wobei die Umlenkstrecke so groß gewählt wird, daß die Werkstückhalter nach dem Durchlauf der Umlenkstrecke am Drehtisch eine Bearbeitungsstation erreichen, deren Art von der zuvor absolvierten Bearbeitungsposition abweicht (FR-A 24 63 081). Da bei solchen kontinuierlich arbeitenden Maschinen die Werkzeuge stets an umlaufenden Drehtischen angeordnet sind, kommen sie für solche Bearbeitungen nicht in Frage, bei denen wegen hoher Präzision oder wegen der Größe der Werkzeuge oder aus anderen Gründen die umlaufende Anordnung des Werkzeugs unerwünscht oder unmöglich ist.

Der Erfindung liegt daher die Aufgabe zugrunde, ein Verfahren der eingangs genannten Art zu schaffen, das bei kontinuierlicher Arbeitsweise eine stationäre Werkzeuganordnung erlaubt.

Die erfindungsgemäße Lösung besteht darin, daß die Bearbeitungsstationen ständig bis auf mindestens eine leere Bearbeitungsstation mit Werkstückhaltern besetzt sind und die flexibel aneinandergereihten Werkstückhalter, deren Zahl von der Zahl der Bearbeitungsstationen verschieden ist, mittels eines kontinuierlich und konzentrisch zu der Folge von Bearbeitungsstationen umlaufenden Umsetzers nacheinander umgesetzt werden, indem zunächst ein Werkstückhalter auf die leere Bearbeitungsstation, ein folgender Werkstückhalter auf die zuvor von dem ersten Werkstückhalter eingenommene Bearbeitungsstation umgesetzt wird, usw.

Gegenüber den eingangs erläuterten, bekannten Maschinen, bei denen sämtliche Werkstückhalter gleichzeitig umgesetzt werden, wird durch die Erfindung eine beträchtliche Annäherung an kontinuierliche Arbeitsweise dadurch erreicht, indem die Werkstückhalter nicht sämtlich gleichzeitig, sondern aufeinanderfolgend einzeln umgesetzt werden. Die Aufteilung des Umsetzvorgangs in eine Vielzahl von den jeweiligen Halterpositionen zugeordneten Einzelschritten vermindert die jeweils zu beschleunigenden und abzubremsenden Massen auf einen kleinen Bruchteil, wobei der kontinuierliche Fortschritt des Umsetzvorgangs von einer Halterposition zur nächsten die Voraussetzung dafür schafft, daß wesentliche Massen, nämlich diejenigen Teile, die die Umsetzbewegung durchführen, kontinuierlich bewegt werden können.

Gegenüber den an zweiter Stelle genannten, bekannten Maschinen hat die Erfindung den Vorteil, daß die Werkzeuge stationär angeordnet werden können, ohne daß der Vorteil der Kontinuierlichkeit aufgegeben zu werden braucht.

Zwar ist das von der Erfindung genutzte kinematische Prinzip aus der Getriebetechnik bekannt (DE-A 17 50 279); aber es lag für den Fachmann, der Bearbeitungsmaschinen auf der Suche nach geeigneten Förderprinzipien für eine Reihe von Werkstücken gegenüber einer Reihe von Bearbeitungsstationen nicht nahe, sich auf dem Gebiet der Getriebetechnik umzutun und die in einem speziellen Fall dort zwischen An- und Abtrieb zur Übertragung der Bewegung verwendeten Hilfselemente auf ihre Eignung als Werkstückträger in Bearbeitungsmaschinen zu überprüfen.

Die Durchführung des Verfahrens geschieht zweckmäßigerweise mittels einer Vorrichtung nach dem Oberbegriff des Anspruchs 2, die dadurch gekennzeichnet ist, daß konzentrisch zu dem Kreis der stationär angeordneten Arbeitsstationen ein Umsetzer umläuft, der die kettenartig verbundenen Werkstückhalter nacheinander erfaßt und eine Umsetzbahn für die umzusetzenden Werkstückhalter von einer Bearbeitungsstation zu einer folgenden bildet, die eine Anzahl von Werkstückhaltern enthält, die abweicht von der Anzahl der Bearbeitungsstationen in dem von Umsetzbahn überbrückten Bereich.

Bei der praktischen Realisierung der Erfindung ist der starren, stationären und abstandsgleichen Anordnung der Werkzeuge die Reihe der Werkstückhalter in flexibler Form zugeordnet, um sich einerseits an die Reihe mit feststehender Konfiguration anlegen und andererseits im Umsetzbereich von dieser abheben zu können. Der Begriff Flexibilität ist in diesem Zusammenhang in weitestem Sinne zu verstehen. Er besagt nicht, daß die einzelnen Halter in der Reihenlängsrichtung fest miteinander verbunden sein müssen, obgleich dies vorteilhaft ist. Vielmehr kann die flexible Reihe auch von unverbundenen Werkstückhaltern gebildet sein, die nur je von Position zu Position durch besondere Organe festgehalten werden. Dabei kann es sich beispielsweise einerseits um Fixierorgane in den Bearbeitungsstationen und andererseits um Halteorgane an der Umsetzbahn handeln, die dann wirksam werden, wenn die Werkstückhalter durch den Umsetzer aufgenommen, in ihrer Reihenfolge gespeichert und in einer anderen Bearbeitungsstation wieder abgesetzt werden. Damit der Umsetzeffekt zustande kommt, muß die Zahl der Werkstückhalter in der Umsetzbahn entsprechend größer oder kleiner sein als die Zahl der Bearbeitungsstationen in dem von der Umsetzbahn überbrückten Bereich. Wenn die Werkstückhalter mit konstanten Abständen kettenartig verbunden sind, muß demnach die Umsetzbahn um einen Teilungsabstand der Bearbeitungsstationen bzw. Werkstückhalter oder ein ganzes Vielfaches davon kürzer oder länger sein als der von ihr überbrückte Bogen der Reihe von Bearbeitungsstationen. Statt dessen kann vorgesehen werden, daß der Abstand der Werkstückhalter in der Umsetzbahn abweichend von dem Abstand in den Bearbeitungsstationen gesteuert wird. Wenn die Werkstückhalter miteinander kettenartig verbunden sind, kann der unterschiedliche Abstand nach der Erfindung dadurch realisiert werden, daß die Verbindung der Werkstückhalter durch eine Lenkeranordnung variabler Länge dargestellt wird, deren Größe durch eine zusätzliche Steuerkurve bestimmt ist. In einer anderen Ausführungsform, die sich insbesondere dann anbietet, wenn die Werkstückhalter unverbunden sind, ist der Umsetzer mit einer Antriebsvorrichtung für die Werkstückhalter versehen, die jeden einzelnen Werkstückhalter ergreift und im Umsetzer einer Förderbewegung mit geeignetem Abstand von den benachbarten Werkstückhaltern und mit geeigneter Geschwindigkeit unterwirft. Schließlich besteht auch die Möglichkeit, die einzelnen Werkstückhalter durch Federn miteinander zu verbinden, die es ihnen erlauben, je nach den ihnen vom Umsetzer aufgezwungenen Raumverhältnissen einen größeren oder geringeren Abstand voneinander einzunehmen, als es dem Abstand der Bearbeitungsstationen entspricht. Die Federkraft sorgt dabei für eine gleichmäßige Aufteilung der im Umsetzer vorhandenen Bewegungsstrecke auf die Zahl der darin befindlichen Halter-, Zwischenräume. Auf diese Weise kann sowohl eine Verringerung (Druckfeder) als auch eine Vergrößerung (Zugfeder) der Halterabstände gegenüber den Abständen der Bearbeitungsstationen erzielt werden. Diese Lösung kann mit einer Zwangsführung der Werkstückhalter zumindest am Ende der Umsetzbahn kombiniert werden, damit die Werkstückhalter genau in die ihnen zugeordneten Bearbeitungsstationen gelangen.

Nach der Erfindung kann die Umsetzbahn innerhalb des Kreises der Bearbeitungsstationen umlaufen. Der Umsetzer befindet sich daher überwiegend radial innerhalb des von dem Trägerkörper der Bearbeitungsstationen umschriebenen Raums. Dies ergibt den Vorteil, daß man mit einer verhältnismäßig geringen Zahl von Werkstückhaltern auskommt. Gleichzeitig sind die Werkzeuge von außen gut zugänglich. Jedoch kann es auch Vorteile haben, die Umsetzbahn außerhalb des Kreises der Bearbeitungsstationen anlaufen zu lassen.

Bei einer besonders vorteilhaften Ausführungsform der Erfindung wird die Form der Reihe der Werkstückhalter vom Umfang einer Führungskurve bestimmt, an dem die Werkstückhalter umlaufen und der auf einem Teil seines Umfangs die Umsetzbahn bildet, während der übrige Teil kreisförmig dem Verlauf der Bearbeitungsstationen folgt, wobei diese Führungskurve innerhalb des Trägers der Bearbeitungsstationen umläuft.

Häufig ist es erforderlich, daß die Werkstückhalter gegenüber den Werkzeugen eine (von der Umsetzbewegung gesonderte) Relativbewegung durchführen. Wenn diese mit komplizierter Steuerung verbunden ist, wird man sie oftmals dem Werkzeug zuordnen. Wenn sie aber einfacher Natur ist, kann es vorteilhaft sein, sie den Werkstückhaltern zuzuordnen. Dabei kann die Relativbewegung von der Umlaufbewegung des Umsetzers abgeleitet sein. Dies ist möglich mittels Steuerkurven, die mit dem Umsetzer rotieren, während die Halter bzw. Werkzeuge mit Steuerteilen versehen sind, die von einer Steuerkurve beaufschlagt sind und dadurch die Bewegung übertragen. Wenn unterschiedliche Bewegungen bei verschiedenen Werkzeugen vorzusehen sind, können auch unterschiedliche Steuerkurven vorgesehen werden, die unterschiedliche Grunddurchmesser oder Höhenlage aufweisen und nur auf bestimmte Steuerorgane mit entsprechend übereinstimmender Position bei bestimmten Werkzeugen einwirken. Während durch Steuerkurven Hubbewegungen veranlaßt werden können, können durch aufeinander abrollende Teile Drehbewegungen übertragen werden, z.B. mittels eines an einem Teil vorgesehenen Zahnbogens, der mit einem Ritzel am anderen Teil zusammenwirkt.

Zwar kann es im Zusammenhang der Erfindung besonders vorteilhaft sein, Bewegungen der Werkzeuge oder der Werkstücke von der Relativdrehung der beiden Maschinenteile abzuleiten; jedoch ist es selbstverständlich auch möglich, separate Antriebe vorzusehen, die umlaufsynchron gesteuert sind.

Eine andere Vorrichtung zur Durchführung des erfindungsgemäßen Verfahrens ist dadurch gekennzeichnet, daß bei einer Vorrichtung nach dem Oberbegriff des Anspruchs 13 einer Gruppe von n Bearbeitungsstationen eine Gruppe von (n-1) Werkstückhaltern gegenübersteht, die in Förderrichtung um wenigstens einen Bearheitungsstationsabstand beweglich mit dem Förderer einzeln verbunden sind und deren Verbindungspunkte mit dem konzentrisch zu der Folge von Bearbeitungsstationen umlaufenden Förderer einen Abstand voneinander aufweisen, der um den Faktor n/(n-1) größer ist als der Bearbeitungsstationsabstand, und daß eine Steuerungseinrichtung zum Umsetzen eines der der leeren Bearbeitungsstation benachbarten Werkstückhalters in die leere Bearbeitungsstation, des folgenden Werkstückhalters in die dadurch leer werdende Bearbeitungsstation, usw., vorgesehen ist.

Die Anordnung kann kreisförmig sein, wobei unter den genannten Abeständen Winkelabstände anzunehmen sind. Statt dessen ist auch eine zumindest teilweise gestreckte Anordnung möglich, bei welcher an einer gestreckten Reihe von Bearbeitungsstationen ein die Werkstückhalter tragender, vorzugsweise geschlossener Kettenförderer gegenübersteht. Das rücklaufende Trum dieses Kettenförderers kann gleichfalls mit einer Reihe von Bearbeitungsstationen zusammenwirken; erforderlich ist dies jedoch nicht.

Die Geschwindigkeit des Förderers ist so groß, daß er sich bei jedem Umsetzvorgang um die Differenz zwischen dem Bearbeitungsstationsabstand und dem Werkstückhalterabstand weiterbewegt, und zwar entgegen der Richtung, in welcher die Umsetzvorgänge aufeinanderfolgen.

Nach der Erfindung kann diese Vorrichtung so ausgeführt sein, daß die Werkstückhalter mit dem Förderer durch eine sie in Umsetzrichtung belastende Feder verbunden sind, so daß die Umsetzbewegung unter der Wirkung dieser Feder stattfindet. An der jeweils leeren Bearbeitungsstation ist ein Anschlag vorgesehen, der den unter der Wirkung der Feder in Umsetzbewegung befindlichen Werkstückhalter zurückhält. Damit der Werkstückhalter die vorherige Bearbeitungsstation nicht vorzeitig verläßt, können dort entsprechende Steuereinrichtungen vorgesehen sein, die ihn festhalten. Diese können den erwähnten Anschlag umfassen, wobei dieser in dem Augenblick, in welchem die Umsetzbewegung beginnen soll, entfernt wird oder der Werkstückhalter durch einen anderen Teil der Steuereinrichtung über diesen Anschlag hinweggehoben wird. Es handelt sich dabei um Steuereinrichtungen, die bei jeder Bearbeitungsstation vorgesehen und in dem gewünschten Augenblick aktiviert werden können. Jedoch kann als Steuereinrichtung auch ein umlaufender Auslöser vorgesehen sein, der jeweils auf den aus einer Bearbeitungsstation zu lösenden und umzusetzenden Werkstückhalter bzw. auf die Mittel, die diesen in der Bearbeitungsstation festhalten, einwirkt.

Die Erfindung wird im folgenden näher unter Bezugnahme auf die Zeichnung erläutert. Darin zeigen:
- Fig. 1 bis 4: vier Draufsichten auf unterschiedliche Maschinenkonfigurationen,
- Fig. 5: eine detailliertere Draufsicht auf eine konkrete Ausführungsform,
- Fig. 6: eine Schnittansicht der in Fig. 5 gezeigten Ausführungsform,
- Fig. 7 und 8: Draufsichten auf weitere Ausführungsformen und
- Fig. 9: eine Teil-Draufsicht auf eine letzte Ausführungsform.

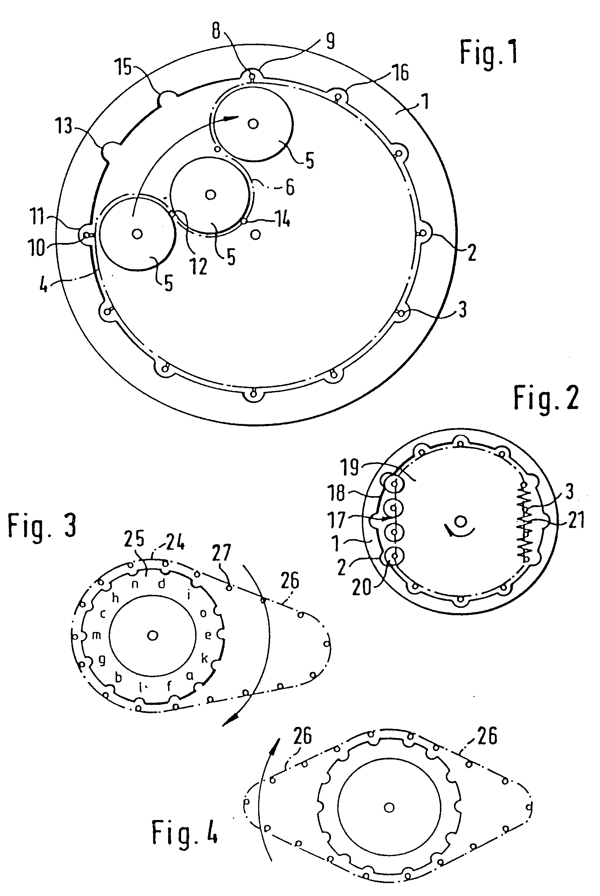

In der Ausführung gemäß Fig. 1 ist ein ringförmiger Trägerkörper 1 vorgesehen, der eine Reihe von Bearbeitungsstationen 2 mit Werkzeugen an seiner Innenseite aufweist, die schematisch durch nach innen offene Halbkreise angedeutet sind. Sie gelangen in übereinstimmende Position mit Werkstückhaltern 3, die als flexible Förderreihe miteinander durch eine Kette 4 verbunden sind, die über den größeren Teil des Umfangs an der Innenseite des Trägerkörpers 1 durch nicht gezeigte Mittel gehalten ist, während sie in dem in der Darstellung links oben erscheinenden Teil durch Umlenkscheiben 5 davon abgehoben ist, die gemeinsam einen W-förmigen Pfad 6 für die Kette 4 bilden, der die Umsetzbahn darstellt. Die Scheiben 5 sind an einem gemeinsamen Träger gelagert, der in der Zeichnung nicht dargestellt ist und an dem sie in Pfeilrichtung innerhalb des Trägerkörpers 1 umlaufen. Die Umsetzbahn 6 enthält einen Halter mehr als der entsprechende Kreisbogen des Trägerkörpers 1. Die Zeichnung macht anschaulich, daß die Umlenkbahn soeben im Begriff ist, einen Halter 8 aus der zugehörigen Bearbeitungsposition 9 des Trägerkörpers herauszuheben, während ein anderer Halter 10 soeben in eine Position 11 eingesetzt wird. Der in der Umsetzbahn vorletzte Halter 12 wird in die Position 13 gelangen, der Halter 14 in die Position 15, der nächste Halter in die soeben frei werdende Position 9 und demzufolge der Halter 8 in die folgende Bearbeitungsposition 16. Bei einem Umlauf der Umsetzbahn 6 werden sämtliche Halter in die nächstfolgende Bearbeitungsposition umgesetzt. Während der Umsetzbewegung beschreibt jeder Halter eine Hypozykloide mit etwa sinusförmigem Verlauf der Beschleunigung ohne Beschleunigungsspitzen. Das heißt, daß die Umsetzbewegung sich sanft und ruckfrei vollzieht.

Während Fig. 1 eine Anordnung mit nur einer Umsetzbahn zeigt, weist diejenige nach Fig. 2 zwei Umsetzbahnen 17 auf. Das bedeutet, daß jeder Halter 3 der Halterreihe, zweimal je Umlauf umgesetzt wird. Die Halterreihe wird vom Umfang eines Rotors 19 getragen, der in Pfeilrichtung umläuft. Jede Umsetzbahn 17 enthält vier Werkstückhalter, während der überbrückte Bogen des Trägerkörpers 1 nur jeweils drei Bearbeitungsstationen umfaßt. Das bedeutet, daß die Werkstückhalter in der Umsetzbahn einander genähert werden müssen. In dem rechts in der Figur angedeuteten Beispiel sind sie durch Druckfedern miteinander verbunden, die sich im Bereich der Umsetzbahn zusammendrücken. In dem auf der linken Seite angedeuteten Beispiel sind die Werkstückhalter mit Abstandsscheiben 20 versehen, die ihren gegenseitigen Mindestabstand bestimmen und dadurch für eine definierte Lage der Werkstückhalter in der Umsetzbahn sorgen. Dies ist erforderlich, damit die Werkstückhalter störungsfrei in die ihnen zugedachte Bearbeitungsposition eintreten können, ohne daß es dafür komplizierter Führungs- oder Antriebseinrichtungen bedarf.

Die Ausführungsbeispiele gemäß Fig. 3 und 4 zeigen den äußeren Umlauf einer Kette 24 von Werkstückhaltern 27 um den stationären Trägerkörper 25. Nach Fig. 3 soll die Länge der Umsetzbahn 26 um drei Halterdistanzen länger als der entsprechende Kreisbogen des Trägerkörpers 25 sein. Die Werkstückhalter 27 werden daher bei jedem Umlauf um drei Schritte weitergesetzt. Der Trägerkörper 25 hat 14 Bearbeitungsstationen, die mit den Buchstaben a bis o bezeichnet sind und in deren alphabetischer Reihenfolge von einem Werkstückhalter 27 besetzt werden. Wenn statt 14 Positionen deren 15 vorhanden wären, so würden sich an dem Trägerkörper drei Gruppen von je vier Bearbeitungsstationen bilden, von denen jeweils nur eine Gruppe von jedem Werkstückhalter 27 durchlaufen würde. Bei geringer Anzahl der Bearbeitungsschritte kann dies zur entsprechenden Leistungserhöhung zweckmäßig sein. Wenn jedoch sämtliche Bearbeitungsstationen des Trägerkörpers durchlaufen werden sollen und die Umsetzdifferenz größer als ein Halter ist, darf die Zahl der Haltestationen am Trägerkörper nicht durch die Umsetzdifferenz teilbar sein.

Durch Pfeil ist in Fig. 3 angegeben, daß die Umsetzbahnen 26 um den Trägerkörper 25 umlaufen soll.

Fig. 4 zeigt eine Abwandlung der Fig. 3 mit zwei Umsetzbahnen 26 am Umfang, die um 180° zueinander versetzt sind. Dies ergibt gleiche Taktzeiten. Wenn unterschiedliche Taktzeiten erwünscht sind, kann unterschiedlicher Winkelversatz gewählt werden.

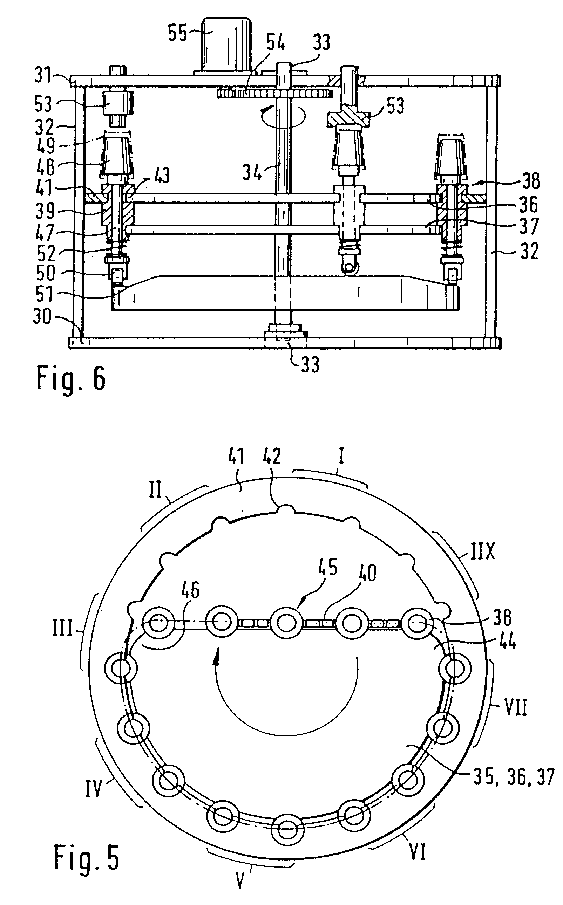

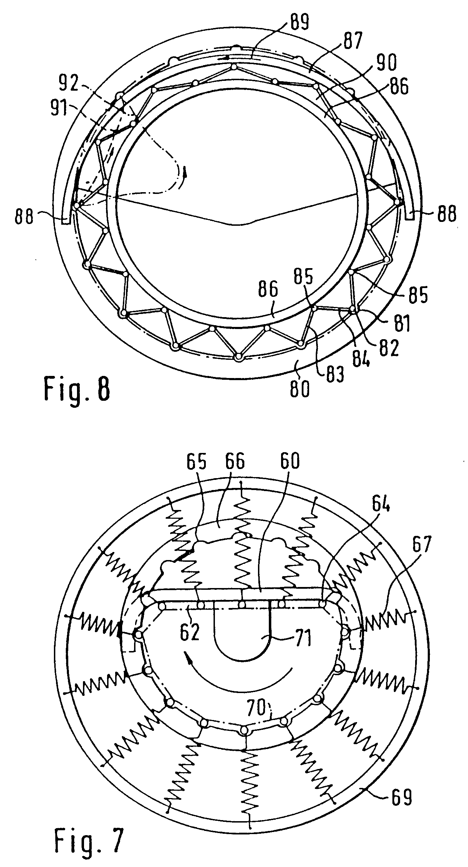

Im Ausführungsbeispiel der Fig. 5 und 6 bildet das Maschinengestell, bestehend aus Unterplatte 30, Oberplatte 31 und Verbindungssäulen 32
eine zentrale, koaxiale Lagerung 33 für die Welle 34, die über Getriebe 54 von dem Motor 55 in Pfeilrichtung kontinuierlich angetrieben ist. Die Welle trägt den Rotor 35, der von den an der Welle 34 befestigten Platten 36 und 37 gebildet ist, die, wie in Fig. 5 gezeigt, etwa halbkreisförmigen, abgerundeten Umriß aufweisen. Daran sind die Werkstückhalter 38 geführt, die Führungskörper 39 umfassen, die am Umfang der Platten 36, 37 gleiten und untereinander durch eine Rollenkette 40 verbunden sind. Die Führungskörper 39 besitzen Umfangsausnehmungen, in die die Ränder der Platten 36, 37 eingreifen. Am Gestell ist eine Ringplatte 41 in der selben Höhe wie die Platte 36 angeordnet, die Umfangsausnehmungen 42 aufweist, die der Aufnahme der Führungskörper 39 dienen. Ein Führungskörper 39, der einerseits in einer solche Umfangsausnehmung 42 sitzt und andererseits darin durch den Rand 43 der Platte 36 gehalten ist, ist eindeutig positioniert. Aus dieser Lage wird er herausgehoben, sobald die Ecke 44 des Rotors 35 bzw. der Platten 36, 37 ihn erreicht. Die durch die Kette 40 zusammengehaltene, flexible Förderreihe wird dann von der Ringplatte 41 abgehoben und in die Umsetzbahn 45 geführt. Wenn ein Führungskörper 39 die weitere Ecke 46 des Rotors erreicht, wird er wieder in eine Umfangsausnehmung 42 der Ringplatte 41 eingesetzt.

Jeder Führungskörper 39 enthält eine Führungsstange 47, die am oberen Ende einen Aufnahmedorn 48 für einen Papierbecherrohling 49 trägt. Am unteren Ende trägt sie eine Rolle 50, die als Nockenfolger mit einer mit der Welle 34 des Rotors drehfest verbundenen Steuerkurve 51 zusammenwirkt. Durch eine Feder 52 wird die Führungsstange 47 in ihre untere Lage gedrängt. Diese Anordnung hat zur Folge, daß jeder Aufnahmedorn 48, sobald der zugehörige Halter in eine Bearbeitungsposition eingesetzt ist, von der Steuerkurve 51 angehoben wird.

Den Ausnehmungen 42 der Ringplatte 41 sind Werkzeuge 53 zugeordnet, die durch die soeben erläuterte Hubbewegung des Aufnahmedorns 48 mit dem Papierbecher 49 in Bearbeitungseingriff gelangen. Soweit es sich dabei um Werkzeuge handelt, die nur durch axiale Relativbewegung mit dem Aufnahmedorn 48 bzw. dem davon getragenen Papierbehälter 49 in Eingriff kommen, wie dies bei der Bördelbildung der Fall ist, können sie daher sehr einfach ausgebildet sein.

Bei dem Ausführungsbeispiel gemäß Fig. 5 und 6 umfaßt die Umsetzbahn fünf Halter, während der zugehörige Kreisbogen der Trägerplatte (Ringplatte 41) sieben Halteausnehmungen 42 aufweist. Die Differenz ist 2. Der Trägerkörper besitzt 16 Haltepositionen, also eine gerade Anzahl. Das bedeutet, daß jeder Werkstückhalter 38 nur mit den acht Haltepositionen einer von zwei Gruppen von Haltepositionen des Trägerkörpers zusammenwirkt. Bei acht Bearbeitungsschritten je Werkstück ergibt dies eine Verdoppelung der Leistung gegenüber einer Maschine mit nur acht Bearbeitungsstationen des Trägerkörpers.

Eine Maschine der in Fig. 5 und 6 gezeigten Art kann beispielsweise zur Bildung des Bodens eines Papierbechers in folgender Weise eingesetzt werden:
- Halteposition I:: Bodenzuführung
- Halteposition II:: Zuführung der Bechermäntel
- Halteposition III:: Heißluftbehandlung des Bodenbereichs 1. Phase
- Halteposition IV:: Heißluftbehandlung 2. Phase
- Halteposition V:: Bördeln
- Halteposition VI:: Verpressung des Bodens
- Halteposition VII:: Becherlüften
- Halteposition VIII:: Becherabgabe

Entsprechende Vorrichtungen können für die Mundrollbildung des Bechers eingesetzt werden.

In der Ausführungsform gemäß Fig. 7 sind die Werkstückhalter 64, durch Federn 67 od. dgl., deren anderes Ende an einem Ring 69 befestigt ist, radial nach außen gezogen. Sie werden dadurch in die Haltepositionen 65 eines feststehenden Rings 66 gezogen, der bei diesen Haltepositionen die Werkzeuge trägt. An einem Rotor 71 läuft konzentrisch zu dem Ring 66 eine Führungsschiene 60 um, die die Umsetzbahn 62 bildet, indem sie mit ihrem vorlaufenden Ende die Werkstückhalter 64 aus den Haltepositionen 65 entgegen der Federkraft 67 heraushebt und bei ihrem nachlaufenden Ende zum Einsetzen in die nächstgelegene Halteposition 65 wieder entläßt. Dabei ist die Länge der Umsetzbahn in dem dargestellten Beispiel um zwei Halter bzw. Haltepositionen kürzer als der entsprechende Kreisbogen des Rings 66. Das heißt, daß in dem gegebenen Beispiel die Werkstückhalter 64 bei jedem Umlauf der Führungsschiene 60 an dem Ring 66 um zwei Haltepositionen 65 weitergesetzt werden. Dieser Umsetzbewegung kann der Ring 69 folgen, da er sich lose mitdrehen kann. Ferner ist es eine Eigenart dieser Konstruktion, daß eine feste Verbindung zwischen benachbarten Werkstückhaltern 64 nicht erforderlich ist. Eine Kette 70 kann vorhanden sein, jedoch kann es Vorteile haben, auf sie zu verzichten. Damit jedoch die Werkstückhalter in der Umsetzbahn eine gleichförmige Bewegung durchführen und ihre Ankunft bei einer bestimmten Halteposition 65 gesichert ist, ist es zweckmäßig, sie mit Abstandshaltern auszurüsten, d.h. Einrichtungen, die ihren Mindestabstand vorgeben. Dieser Mindestabstand braucht nicht mit dem gegenseitigen Abstand der Haltepositionen 65 übereinzustimmen, sondern kann kleiner sein.

Statt der Federn 67, die die Werkstückhalter 64 nach außen ziehen, können Einrichtungen vorgesehen sein, die vom Zentrum oder einem zentrumsnahen Bereich her die Werkstückhalter 64 nach außen drücken.

Im Beispiel der Fig. 8 bildet der ringförmige Trägerkörper 80 Aufnahmen 81 als Bearbeitungsstationen für Werkstückhalter 82, die eine geschlossene Kette bilden, da sie jeweils durch zwei Lenker 83, 84 miteinander verbunden sind, die sowohl bei den Werkstückhalter 82 als auch in dem zweiten Verbindungspunkt 85 Gelenke enthalten. Die Gelenkpunkte 85 werden von einem zum Trägerkörper 80 konzentrischen inneren Führungsring 86 geführt, wobei die Führungsfläche zumindest in demjenigen Bogen, in welchem die Werkstückhalter 82 in den Bearbeitungsstationen 81 liegen, kreisförmig ist. Zweckmäßig ist es, diese Fläche insgesamt kreisförmig zu gestalten, da sie dann stationär angeordnet sein kann. Anderenfalls ist sie zu gemeinsamer Drehbewegung mit der Führungsschiene 87 verbunden, die in diesem Ausführungsbeispiel gemeinsam mit dem Führungsring 86 den Umsetzer bildet.

Die Führungsschiene 87 hat an ihren Enden 88 einen Mittelpunktsabstand, der mindestens ebenso groß ist wie derjenige, der in den Bearbeitungsstationen 81 sitzenden Werkstückhalter 82 bzw. eines mit dem Werkstückhalter verbundenen Teils, der mit der Führungsschiene zusammenwirkt, so daß die Werkstücke bei ihrem Umlauf in Pfeilrichtung 89 nach innen aus den Halterungsausnehmungen der Bearbeitungsstationen 81 herausgehoben werden können. Im übrigen Verlauf hat die Führungsschiene 87 einen Mittelpunktsabstand, der geringer ist als derjenige des Trägerkörpers 80, so daß die herausgehobenen Werkstückhalter an diesen vorbeigeführt werden können.

Während außerhalb des von der Führungsschiene 87 umfaßten Bogens der radiale Abstand zwischen dem Trägerkörper 80 und dem inneren Führungsring 86 konstant und so groß ist, daß die zickzackförmige Anordnung der Lenker 83 den Umfangsabstand der Bearbeitungsstationen 81 entspricht, ist der Radiusabstand zwischen dem inneren Führungsring 86 und der Führungsschiene 87 zwischen deren Enden 88 geringer. Dies hat zur Folge, daß die Zickzack-Anordnung der Lenker 83 gestreckt und somit der Umfangsabstand der Werkstückhalter 82 vergrößert wird, und zwar exakt in solcher Weise, daß in dem von der Führungsschiene 87 erfaßten Bogen eine ganze Zahl von Werkstückhaltern 82 weniger enthalten ist als Bearbeitungsstationen 81. Im dargestellten Beispiel beläuft sich die Differenz auf die Zahl 2, wobei die Gesamtzahl der Bearbeitungsstationen gerade ist. Dies bedeutet - ebenso wie im Beispiel der Fig. 7 - zwei Werkzeugserien vorhanden sind, wobei jedes Werkstück nur einen der beiden Serien durchläuft.

Ein wesentlicher Vorteil der Ausführung gemäß Fig. 8 besteht darin, daß durch den Verlauf der Umsetzbahn 90 zwischen der Führungsschiene 89 und dem inneren Führungsring 86 ein Umsetzweg 91 für die Werkstückhalter definiert werden kann, der ideal kurz und beschleunigungsarm ist. Man erkennt aus dem Verlauf des Umsetzwegs 91, daß dieser wesentlich kürzer als der Weg 92 ist, der sich bei Anwendung der Vorrichtung nach Fig. 5 und 6 ergibt.

Es versteht sich, daß die Vorrichtung auch mit einem Umsetzweg ausgeführt werden könnte, in welchem die Abstände der Werkstückhalter nicht größer, sondern kleiner sind als im übrigen Umlaufbereich, nämlich dadurch, daß der Abstand zwischen den Führungsflächen des inneren Führungsrings 86 und der äußeren Führungsschiene 87 nicht verkleinert, sondern vergrößert wird. Dies ist bei außenliegendem Trägerkörper 80 durch Einziehung der Führungsfläche des inneren Führungsrings 86 im Bereich der Führungsschiene 87 möglich und ergibt sich bei innenliegendem Trägerkörper 80 mit außen umlaufender Führungsschiene 87 durch deren radialer Aufweitung im Umsetzbereich.

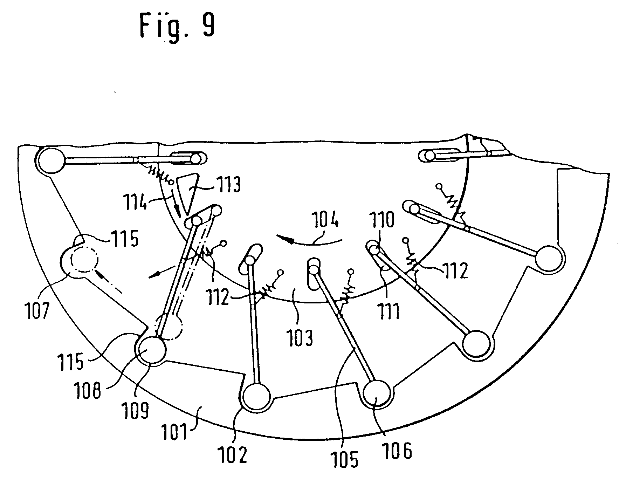

In der letzten Ausführungsform gemäß Fig. 9 erkennt man den vorzugsweise stationären Träger 101 für eine Gruppe von 7 Bearbeitungsstationen 102, die sich über 180° der Kreisanordnung erstrecken. Eine damit übereinstimmende Anordnung befindet sich auf der anderen, nicht gezeigten Seite der Anordnung Selbstverständlich kann die Anordnung sich aber auch über den Vollkreis erstrecken.

Konzentrisch zu dem Träger 1 ist eine Scheibe 103 vorgesehen, die in Pfeilrichtung 104 angetrieben ist. Sie trägt über Arme 105 Werkstückhalter 106, von denen die gezeigte Anordnung 6 Stück aufweist, die den 7 Bearbeitungsstationen 102 zugeordnet sind. Demnach ist stets eine Bearbeitungsstation 107 leer und bereit für die Aufnahme eines umzusetzenden Werkstückhalters 108, der sich in der davor befindlichen Bearbeitungsstation 109 befindet.

Die Arme 105 sind mit Zapfen 110 in Langlöchern 111 der Scheibe 103 derart geführt, daß sie auf der Umfangslinie der Bearbeitungsstationen 102 unterschiedliche Positionen in Umfangsrichtung einnehmen können, die mindestens um den Abstand der Bearbeitungsstationen 102 auseinanderliegen. Ferner ist zwischen der Scheibe 103 und jedem der Arme 105 eine Druckfeder 112 derart angeordnet, daß die Werkstückhalter 108 sowohl radial nach außen als auch in der Drehrichtung der Scheibe 104, also in der Umsetzrichtung, beaufschlagt sind. Durch die Federkraft (und gegebenenfalls weitere, in der Darstellung nicht gezeigte Mittel) werden die Werkstückhalter 106 in den Bearbeitungsstationen 102, die als Vertiefungen ausgeführt sind, festgehalten.

Zum Umsetzen eines Werkstückhalters 108 in die leere Bearbeitungsstation 107 muß dieser daher aus der Bearbeitungsstation 109 herausgehoben werden. Zu diesem Zweck ist ein Umlaufnocken 113 vorgesehen, der in Pfeilrichtung 114 umläuft, und zwar während jedes Maschinentakts einmal, wodurch für sämtliche Werkstückhalter, einer nach dem anderen, die Umsetzbewegung eingeleitet wird.

Der Nocken 113 wirkt jeweils auf denjenigen Werkstückhalter, der der jeweils leeren Bearbeitungsstation 107 am nächsten ist. Dessen Halterung in der Scheibe 103 fluchtet dann auch jeweils etwa mit der leeren Bearbeitungsstation 107. Er wirkt auf den Zapfen 110 in solcher Weise ein, daß dieser, wie strichpunktiert bei dem Werkstückhalter 108 angedeutet, zum Zentrum hin gegen die Wirkung der Feder 112 angehoben wird, wodurch der Werkstückhalter 108 über den Anschlag 115 hinweggehoben wird, der die Vertiefung der betreffenden Bearbeitungsstation 109 auf der Umsetzseite begrenzt. Unter der Wirkung der Feder 112 kann der Arm 105 nun mit dem Werkstückhalter 108 umschlagen zur leeren Bearbeitungsstation 107, bis der Werkstückhalter durch den dort befindlichen Anschlag 115 angehalten und durch die Feder in die Vertiefung der Bearbeitungsstation gedrückt wird.

Es versteht sich, daß an die Stelle der Federn 112 auch aktive Antriebsorgane treten könnten, die im Schalttakt gesteuert sind und daß auch die Hubfunktion des Nockens 113 in bezug auf die Zapfen 110 durch eine jeweils bei den einzelnen Halterungen vorgesehene Einrichtung, die individuell gesteuert wird, ersetzt werden könnte. Ferner sei vermerkt, daß die Verbindung der Werkstückhalter 106 mit der Scheibe 103 durch die Arme 105 nicht erforderlich ist, wenn auf andere Weise für eine geeignete Führung der Werkstückhalter gesorgt ist. Der im Anspruch verwendete Begriff des Förderers ist daher im weitesten Sinne zu verstehen.

## Patentansprüche

1. Verfahren zum Führen einer geschlossenen Reihe von Werkstückaltern (3,38,64,82;106) durch eine geschlossene Folge von kreisförmig stationär angeordneten Bearbeitungsstationen (2,42,65,81;102), in denen die Werkstückhalter zeitweise festgehalten und periodisch umgesetzt werden, dadurch gekennzeichnet, daß die Bearbeitungsstationen ständig bis auf mindestens eine leere Bearbeitungsstation mit Werkstückhaltern besetzt sind und die flexibel aneinandergereihten Werkstückhalter, deren Zahl von der Zahl der Bearbeitungsstationen verschieden ist, mittels eines kontinuierlich und konzentrisch zu der Folge von Bearbeitungsstationen umlaufenden Umsetzers nacheinander umgesetzt werden, indem zunächst ein Werkstückhalter auf die leere Bearbeitungsstation, ein folgender Werkstückhalter auf die zuvor von dem ersten Werkstückhalter eingenommene Bearbeitungsstation umgesetzt wird, usw.

2. Vorrichtung zur Durchführung des Verfahrens nach Anspruch 1 mit einer Folge von stationären, längs eines Kreises angeordneter Bearbeitungsstationen (2, 42, 65, 81) und einer geschlossenen Reihe von Werkstückhaltern (3, 38, 64, 82), die zeitweise in den Bearbeitungsstationen festgehalten und periodisch umgesetzt werden, dadurch gekennzeichnet, daß ein Umsetzer (5, 19, 44, 60, 87) vorgesehen ist, der konzentrisch zu dem Kreis der Bearbeitungsstationen umläuft, die kettenartig verbundenen Werkstückhalter nacheinander erfaßt und eine Umsetzbahn (6, 45, 62, 90) für die umzusetzenden Halter von einer Bearbeitungsstation zu einer folgenden bildet, die eine Anzahl von Werkstückhaltern enthält, die abweicht von der Zahl der Bearbeitungsstationen in dem von der Umsetzbahn überbrückten Bereich.

3. Vorrichtung nach Anspruch 2, dadurch gekennzeichnet, daß die Umsetzbahn (6, 45) um eine Teilung der Bearbeitungsstationen (2, 42) oder ein ganzes Vielfaches davon kürzer oder länger ist als der von ihr überbrückte Bogen der Reihe von Bearbeitungsstationen und daß die Werkstückhalter mit konstanten Abständen kettenartig verbunden sind.

4. Vorrichtung nach Anspruch 2, dadurch gekennzeichnet, daß die Abstände der Werkstückhalter (64, 82) in der Umsetzbahn (62, 90) abweichen von den Abständen der Bearbeitungsstationen (65, 81).

5. Vorrichtung nach einem der Ansprüche 2 bis 4, dadurch gekennzeichnet, daß die Umsetzbahn (6, 45, 62, 90) innerhalb des Kreises der Bearbeitungsstationen umläuft.

6. Vorrichtung nach einem der Ansprüche 2 bis 4, dadurch gekennzeichnet, daß die Umsetzbahn außerhalb des Kreises der Bearbeitungsstationen umläuft (Fig. 3 und 4)

7. Vorrichtung nach einem der Ansprüche 2 bis 6, dadurch gekennzeichnet, daß die Reihe der Werkstückhalter eine Führungskurve (19; 35, 36, 37) umläuft, die auf einem Teil ihres Umfangs die Umsetzbahn bildet.

8. Vorrichtung nach einem der Ansprüche 2 bis 6, dadurch gekennzeichnet, daß die Werkstückhalter (82) durch eine Lenkeranordnung (83, 84) variablen Werkstückhalterabstand verbunden sind, dessen Größe durch eine zusätzliche Steuerkurve (86, 87) bestimmt ist.

9. Vorrichtung nach einem der Ansprüche 2 bis 6, dadurch gekennzeichnet, daß der Umsetzer mit einer Antriebsvorrichtung für die Werkstückhalter versehen ist.

10. Vorrichtung nach einem der Ansprüche 2 bis 9, dadurch gekennzeichnet, daß die Werkstückhalterverbindung eine Feder (67) enthält.

11. Vorrichtung nach einem der Ansprüche 2 bis 10, dadurch gekennzeichnet, daß Steuerungsorgane für eine Relativbewegung von Werkzeugen oder Werkstückhaltern eine mit dem Umsetzer umlaufende Steuerkurve (51) umfassen.

12. Vorrichtung nach Anspruch 11, dadurch gekennzeichnet, daß mehrere Steuerkurven mit unterschiedlichem Grunddurchmesser und/oder unterschiedlicher Höhenlage vorgesehen sind.

13. Vorrichtung zur Durchführung des Verfahrens nach Anspruch 1 mit einer Folge von stationären, längs eines Kreises angeordneten Bearbeitungsstationen (102) und einer geschlossenen Reihe von an einem Förderer (103) angeordneten Werkstückhaltern (106), die zeitweise in den Bearbeitungsstationen festgehalten und periodisch umgesetzt werden, indem der Förderer längs der Folge von Bearbeitungsstationen bewegt wird, dadurch gekennzeichnet, daß einer Gruppe von n Bearbeitungsstationen (102) eine Gruppe von (n-1) Werkstückhaltern (106) gegenübersteht, die in Förderrichtung (104) um wenigstens einen Bearbeitungsstationsabstand beweglich mit dem Förderer einzeln verbunden sind und deren Verbindungspunkte (110, 111) mit dem konzentrisch zu der Folge von Bearbeitungsstationen umlaufenden Förderer (103) einen Abstand voneinander aufweisen, der um den Faktor n/(n-1) größer ist als der Bearbeitungsstationsabstand, und daß eine Steuerungseinrichtung (112, 113, 115) zum Umsetzen eines der leeren Bearbeitungsstation (107) benachbarten Werkstückhalters (108) in die leere Bearbeitungsstation (107) des folgenden Werkstückhalters, in die dadurch leer werdende Bearbeitungsstation (109), usw., vorgesehen ist.

14. Vorrichtung nach Anspruch 13, dadurch gekennzeichnet, daß die Folge der Bearbeitungsstationen (102) und der für die Werkstückhalter (106) vorgesehene Förderer (103) kreisförmig angeordnet sind, wobei die Abstände als Winkelabstände zu messen sind.

15. Vorrichtung nach Anspruch 13 oder 14, dadurch gekennzeichnet, daß die Werkstückhalter (106) mit dem Förderer (103) durch eine sie in Umsetzrichtung (104) belastende Feder (112) verbunden sind und die Steuereinrichtung einen Auslöser (113) bei der zu verlassenden (109) und einen Anschlag (115) bei der zu erreichenden Bearbeitungsstation (107) umfaßt.

16. Vorrichtung nach Anspruch 15, dadurch gekennzeichnet, daß als Auslöser ein umlaufender Nocken (113) vorgesehen ist.

## Claims

1. Method for guiding an endless series of workpiece holders (3, 38, 64, 82; 106) through an endless series of machining stations (2, 42, 65, 81; 102), which are arranged in a stationary manner in the form of a circle and in which the workpiece holders are temporarily retained and periodically changed over, characterised in that the machining stations are constantly occupied by workpiece holders, except for at least one empty machining station, and the workpiece holders, which are arranged flexibly side by side and the number of which differs from the number of machining stations, are changed over in succession by means of a change-over device, which circulates continuously and concentrically with the series of machining stations, in that one workpiece holder is firstly changed over to the empty machining station, a subsequent workpiece holder is changed over to the machining station previously occupied by the first workpiece holder, etc.

2. Device for carrying out the method according to claim 1, with a series of stationary machining stations (2, 42, 65, 81), which are arranged along a circle, and an endless series of workpiece holders (3, 38, 64, 82), which are temporarily retained in the machining stations and periodically changed over, characterised in that a change-over device (5, 19, 44, 60, 87) is provided which circulates concentrically with the circle of machining stations, takes up the workpiece holders, which are connected like a chain, in succession and forms a change-over path (6, 45, 62, 90) for the holders to be changed over from one machining station to a subsequent one, which path comprises a number of workpiece holders which differs from the number of machining stations in the region spanned by the change-over path.

3. Device according to claim 2, characterised in that the change-over path (6, 45) is shorter or longer than the arc of the series of machining stations which it spans by the spacing of the machining stations (2, 42) or an integral multiple thereof, and that the workpiece holders are connected like a chain at constant spacings.

4. Device according to claim 2, characterised in that the spacings between the workpiece holders (64, 82) in the change-over path (62, 90) differ from the spacings between the machining stations (65, 81).

5. Device according to one of claims 2 to 4, characterised in that the change-over path (6, 45, 62, 90) circulates inside the circle of machining stations.

6. Device according to one of claims 2 to 4, characterised in that the change-over path circulates outside the circle of machining stations (Figures 3 and 4).

7. Device according to one of claims 2 to 6, characterised in that the series of workpiece holders circulates along a guide curve (19; 35, 36, 37) which forms the change-over path over a part of its circumference.

8. Device according to one of claims 2 to 6, characterised in that the workpiece holders (82) are connected by a link arrangement (83, 84) resulting in a variable workpiece holder spacing, the size of which is determined by an additional control cam (86, 87).

9. Device according to one of claims 2 to 6, characterised in that the change-over device is provided with a drive device for the workpiece holders.

10. Device according to one of claims 2 to 9, characterised in that the workpiece holder connection comprises a spring (67).

11. Device according to one of claims 2 to 10, characterised in that control members for a relative movement of tools or workpiece holders comprise a control cam (51) circulating with the change-over device.

12. Device according to claim 11, characterised in that a plurality of control cams of a different base diameter and/or disposed at a different height are provided.

13. Device for carrying out the method according to claim 1, with a series of stationary machining stations (102), which are arranged along a circle, and an endless series of workpiece holders (106), which are arranged on a conveyor (103), temporarily retained in the machining stations and periodically changed over by moving the conveyor along the series of machining stations, characterised in that a group of (n-1) workpiece holders (106) is disposed opposite a group of n machining stations (102), which holders are individually connected to the conveyor in a mobile manner in the conveying direction (104) at a spacing corresponding to at least one machining station spacing, and the points (110, 111) at which they are connected to the conveyor (103), which circulates concentrically with the series of machining stations, are disposed at a spacing from one another which is greater by the factor n/(n-1) than the machining station spacing, and that a control device (112, 113, 115) is provided to change over a workpiece holder (108) which is adjacent to the empty machining station (107) to the empty machining station (107) of the subsequent workpiece holder, to the machining station (109) thus becoming empty, etc.

14. Device according to claim 13, characterised in that the series of machining stations (102) and the conveyor (103) provided for the workpiece holders (106) are arranged in the form of a circle, the spacings being measured as angular spacings.

15. Device according to claim 13 or 14, characterised in that the workpiece holders (106) are connected to the conveyor (103) by a spring (112), which loads them in the change-over direction (104), and the control device comprises a release mechanism (113) for the machining station (109) to be left and a stop (115) for the machining station (107) to be entered.

16. Device according to claim 15, characterised in that a circulating cam (113) is provided as the release mechanism.

## Revendications

1. Procédé de guidage d'une série de porte-pièces (3, 38, 64, 82; 106) en boucle fermée à travers une succession de postes de traitement (2, 42, 65, 81; 102) qui sont disposés en position fixe en cercle et dans lesquels les porte-pièces sont immobilisés temporairement et transférés périodiquement, caractérisé en ce que les postes de traitement sont occupés continuellement par des porte-pièces, à l'exception d'au moins un poste de traitement vide, et en ce que les porte-pièces, qui sont enchaînés de façon flexible et dont le nombre est différent de celui des postes de traitement, sont transférés successivement, au moyen d'un dispositif de transfert qui tourne constamment et concentriquement par rapport à la succession de postes de traitement, en un processus consistant en ce qu'un porte-pièce est d'abord transferé dans le poste de traitement vide, un porte-pièce suivant est transferé dans le poste de traitement occupé précédemment par le premier porte-pièce, et ainsi de suite.

2. Dispositif pour l'exécution du procédé selon la revendication 1, comprenant une succession de postes fixes de traitement (2, 42, 65, 81), disposés le long d'un cercle, et une série de porte-pièces (3, 38, 64, 82) en boucle fermée, qui sont immobilisés temporairement dans les postes de traitement et sont transférés périodiquement, caractérisé en ce qu'il est prévu un dispositif de transfert (5, 19, 44, 60, 87) qui tourne concentriquement par rapport au cercle des postes de traitement, saisit successivement les porte-pièces reliés à la manière d'une chaîne et forme, pour les porte-pièces à transférer d'un poste de traitement à un poste suivant, un trajet de transfert (6, 45, 62, 90) qui contient un nombre de porte-pièces qui diffère du nombre des postes de traitement dans la région qui est franchie en pont le trajet de transfert.

3. Dispositif selon la revendication 2, caractérisé en ce que le trajet de transfert (6, 45) est plus court ou plus long, d'un pas entre postes de traitement (2, 42) ou d'un multiple entier de celui-ci, que l'arc de cercle de la succession de postes de traitement qu'il franchit en pont, et en ce que les porte-pièces sont reliés à la manière d'une chaîne à des distances mutuel les constantes.

4. Dispositif selon la revendication 2, caractérisé en ce que les distances mutuelles des porte-pièces (64, 82) dans le trajet de transfert (62, 90) diffèrent des distances mutuelles des postes de traitement (65, 81).

5. Dispositif selon l'une quelconque des revendications 2 à 4, caractérisé en ce que le trajet de transfert (6, 45, 62, 90) tourne à l'intérieur du cercle des postes de traitement.

6. Dispositif selon l'une quelconque des revendications 2 à 4, caractérisé en ce que le trajet de transfert tourne à l'extérieur du cercle des postes de traitement (fig. 3 et 4).

7. Dispositif selon l'une quelconque des revendications 2 à 6, caractérisé en ce que la série des porte-pièces tourne le long d'une surface courbe de guidage (19; 35, 36, 37) qui forme le trajet de transfert sur une partie de son étendue.

8. Dispositif selon l'une quelconque des revendications 2 à 6, caractérisé en ce que les porte-pièces (82) sont reliés par un système de biellettes (83, 44) à écart variable entre les porte-pièces, dont la grandeur est déterminée par une surface courbe de commande supplémentaire (86, 87).

9. Dispositif selon l'une quelconque des revendications 2 à 6, caractérisé en ce que le dispositif de transfert est muni d'un dispositif d'entraînement pour les porte-pièces.

10. Dispositif selon l'une quelconque des revendications 2 à 9, caractérisé en ce que le système de liaison entre porte-pièces contient un ressort (67).

11. Dispositif selon l'une quelconque des revendications 2 à 10, caractérisé en ce que des organes de commande pour donner un mouvement relatif aux pièces ou aux porte-pièces comprennent une came de commande (51) qui tourne avec le dispositif de transfert.

12. Dispositif selon la revendication 11, caractérisé en ce qu'il est prévu plusieurs cames de commande ayant des diamètres de base différents et/ou des positions en hauteur différentes.

13. Dispositif pour l'exécution du procédé selon la revendication 1, comprenant une succession de postes fies de traitement (102), disposés le long d'un cercle, et une série de porte-pièces (106) en boucle fermée, qui sont disposés sur un transporteur (103) et qui sont immobilisés temporairement dans les postes de traitement et sont transférés périodiquement par le fait que le transporteur est déplacé le long de la succession de postes de traitement, caractérisé en ce qu'à un groupe de n postes de traitement (102) est opposé un groupe de (n-1) porte-pièces (106) qui sont raccordés individuellement au transporteur de façon à être mobiles d'au moins un écart entre postes de traitement dans le sens de transport (104) et dont les points de raccordement (110, 111) au transporteur (103), qui tourne concentriquement par rapport à la succession de postes de traitement, présentent un écart mutuel qui est supérieur, du facteur n/(n-1), à l'écart entre les postes de traitement, et en ce qu'il est prévu un dispositif de commande (112, 113, 115) pour le transfert d'un porte-pièce (108) voisin du poste de traitement vide (107) dans ce poste de traitement vide (107), pour celui du porte-pièce suivant dans le poste de traitement (109) ainsi devenu libre, et ainsi de suite.

14. Dispositif selon la revendication 13, caractérisé en ce que la succession des postes de traitement (102) et le transporteur (103) prévu pour les porte-pièces (106) sont disposes en cercle, les écarts devant être mesures comme des distances angulaires.

15. Dispositif selon la revendication 13 ou 14, caractérisé en ce que les porte-pièces (106) sont reliés au transporteur (103) par un ressort (112) qui les sollicite en direction du transfert (104), et en ce que le dispositif de commande comprend un déclencheur (113) au niveau du poste de traitement à quitter (109) et une butée (115) au niveau du poste de traitement à atteindre (107).

16. Dispositif selon la revendication 15, caractérisé en ce qu'une came tournante (113) est prévue en tant que déclencheur.
